# EUROPEAN PATENT SPECIFICATION

(11) **EP 2 658 801 B1**
(45) Date of publication and mention of the grant of the patent: **01.04.2015**
(21) Application number: 11808835.0
(22) Date of filing: 28.12.2011
(51) Int. Cl.: B65G 47/252, B65B 35/56, A24D 3/02

(54) **FEEDING SYSTEM**
ZUFÜHRSYSTEM
SYSTÈME D'ALIMENTATION

(30) Priority: 29.12.2010 EP 10016173
(43) Date of publication of application: 06.11.2013
(73) Proprietor: Philip Morris Products S.A., 2000 Neuchâtel (CH)
(72) Inventor: FERRAZZIN, Diego, I-41013 Castelfranco Emilia Modena (IT); PAGNONI, Michele, I-40017 San Giovanni in Persiceto (IT); RISSO, Luca, I-16121 Genova (IT)
(74) Representative: Grünecker, Kinkeldey, Stockmair & Schwanhäusser
(86) International application number: PCT/EP2011/006593
(87) International publication number: WO 2012/089343

(56) References cited:
- GB-A- 2 250 969
- GB-A- 2 260 742
- US-A- 5 355 991
- US-A1- 2008 035 162

## Description

The present invention relates to a feeding system for providing substantially cylindrical objects, wherein the substantially cylindrical object comprises a longitudinal axis which extends axially through the substantially cylindrical object. For example, such substantially cylindrical objects could be functional elements of filters, in particular for smoking articles, such as for example cigarettes. In another field, US 5,355,991 A discloses a system for manipulating and conveying cans or packages of food, wherein upright containers are toppled by means of a screw device such that the containers are transferred from an upright orientation to a configuration where they all seem to be aligned. The aligned containers are fed through a hydrostatic sterilizer. This document discloses a feeding system according to the preamble of claim 1 and a method according to the preamble of claim 11.

In the prior art, a variety of filter elements for smoking articles are known. Typically, these filter elements are combined with filter material, to form the filter of a smoking article. The filter elements have a predetermined form and are, for example, made of plastic material. In contrast to common filter material, which is rather soft and can easily be cut or compressed, the filter elements are of rather solid material and have a predetermined shape.

The object of the present invention is to provide a feeding system, which enable to orient and convey substantially cylindrical objects at a high output rate and in a failsafe manner.

According to the invention a feeding system is provided comprising a first and a second feeding apparatus for substantially cylindrical objects wherein the substantially cylindrical objects comprise a longitudinal axis and are asymmetric along their longitudinal axis, as stated in claim 1.

Each feeding apparatus provides substantially cylindrical objects, for example functional elements of filters. The feeding apparatus comprises a feeding means and a rotation assembly. The feeding means is connected to a plurality of substantially parallel first conveyance means. The feeding means provides the substantially cylindrical objects to each of the first conveyance means in a substantially upright orientation. The term "upright" orientation is used to refer to an orientation of the substantially cylindrical objects where the longitudinal axis of a substantially cylindrical object is perpendicular to the transport direction of the first conveyance means.

The rotation assembly is adapted to receive the substantially cylindrical objects from the first conveyance means. The rotation assembly changes the orientation of the longitudinal axis of each of the substantially cylindrical objects by the same predetermined rotation angle.

The rotation assembly is further adapted to provide the substantially cylindrical objects to a second conveyance means, such that successively the longitudinal axes of one substantially cylindrical object from each of the plurality of substantially parallel first conveyance means are aligned with each other in a single line on the second conveyance means.

Thus, a rotation and alignment of a plurality of substantially cylindrical objects from different first conveyance means can be achieved to provide the substantially cylindrical objects on the second conveyance means for further processing onto a single line of objects.

The feeding means of the first feeding apparatus provides the substantially cylindrical objects in a first orientation and the feeding means of the second feeding apparatus provides the substantially cylindrical objects in a second orientation, such that the substantially cylindrical objects in the first orientation and in the second orientation have parallel longitudinal axes but extend into opposite directions. An interlacing apparatus successively provides first a substantially cylindrical object in the first orientation and then a substantially cylindrical object in the second orientation on a third conveyance means. Thus, differently oriented substantially cylindrical objects can be arranged alternately on the third conveyance means. This is particularly beneficial for filter elements for smoking articles. Generally, smoking articles are manufactured in a double configuration such that two tobacco rods are joined by a double filter. Thus, the interlacing apparatus allows providing the substantially cylindrical objects in the right orientations for this purpose. Generally the interlacing apparatus provides between about 100 and about 400 substantially cylindrical objects per minute.

The invention provides the benefit that a stream of alternately oriented first and second substantially cylindrical objects can be provided on the third conveyance means. The first and second substantially cylindrical objects are preferably identically shaped and of the same material, but only differently oriented.

Advantageously, the throughput of the feeding apparatus can be increased as the single line of objects can be supplied from a plurality of slower but interlacing feeding means such that they can be further processed, for example by being used as functional elements of filters of smoking articles.

The substantially cylindrical object comprises a nappe, with a substantially circular or oval cross section, wherein the nappe is extending substantially parallel to the longitudinal axis. The bottom surface of the substantially cylindrical object may be substantially flat to enable that the substantially cylindrical object can be placed on the bottom surface on the first conveyance means. The top surface of the substantially cylindrical object may be substantially flat as well. The substantially cylindrical objects may further comprise a constriction such as a region of reduced diameter of its nappe. The constriction may be provided in a distance to the middle of the nappe, such that the substantially cylindrical objects are asymmetrical along their longitudinal axis. Thus, the two end portions of the nappe, which are adjacent to the constriction, may have a different length. The two end portions of the nappe, which are adjacent to the constriction, have generally the same, constant diameter. It is emphasized that the substantially cylindrical object may be at least partially hollow. The bottom and top surfaces are preferably only defined by the wall of the substantially cylindrical object, such that the inner part of the axial end portions may be open. The end surfaces are preferably oval or circular. Generally, the substantially cylindrical objects may rotate around their longitudinal axis during the conveying on the first and second conveyance means. Preferably, the substantially cylindrical objects are non-cuttable.

Preferably, the orientation of the longitudinal axis of the substantially cylindrical objects is changed by about 90 degrees, for example from the upright orientation into a lying orientation. The term "lying" is used throughout the specification to indicate an orientation of the longitudinal axis of the substantially cylindrical object that is substantially parallel to a transport direction of the substantially cylindrical object.

Preferably, the rotation assembly comprises at least one wheel which enables to rotate the substantially cylindrical objects around the predetermined rotation angle. The wheel of the rotation assembly provides the benefit of rotating the substantially cylindrical object in a controlled manner to enable the exact orientation of the substantially cylindrical objects at the end of the rotation around the predetermined rotation angle.

In one embodiment, the wheel comprises a set of slots, which are arranged at different radial positions and in radial alignment with each other. The slots are adapted to receive the substantially cylindrical objects in a substantially upright orientation, and rotate with the wheel for the predetermined rotation angle. The second conveyance means is adapted to receive the substantially cylindrical objects after the rotation of the wheel around the predetermined rotation angle. By providing a set of slots in radial alignment, the substantially cylindrical objects which are provided on a plurality of parallel first conveyance means can be brought into alignment of the longitudinal axis in the wheel such that they can be ejected from the slots in alignment onto the second conveyance means. It is emphasized that each slot receives a substantially cylindrical object of a dedicated one of the first conveyance means. By means of the wheel with a plurality of slots, the substantially cylindrical objects of the plurality of parallel first conveyance means can be brought into alignment and ejected onto one single second conveyance means. Preferably, the wheel comprises a plurality of sets of radially aligned slots, wherein the angle in between the different sets of slots is a fraction of the rotation angle. Thus, each time the wheel is rotated around the angle in between two neighboring sets of slots new substantially cylindrical objects can be inserted. The substantially cylindrical objects which have already been rotated around the predetermined rotation angle can be ejected from the wheel. Preferably, the plurality of parallel first conveyance means comprises between 2 and 16 parallel first conveyance means, more preferably between 4 and 8 parallel first conveyance means. The number of slots in a set of slots in radial direction of the wheel corresponds to the number of the plurality of parallel first conveyance means. Preferably, the plurality of sets of radially aligned slots on the wheel comprises 2 to 48 sets of radially aligned slots, preferably between 12 and 24 sets of radially aligned slots. Alternatively, depending on the number of slots in a set, two, three or four similar combs may be used, which are described in the following.

Preferably at least one comb is provided, wherein the comb is adapted to push the substantially cylindrical objects from the set of slots onto the second conveyance means after the predetermined rotation. The comb preferably comprises one protrusion for each slot of the set of slots, wherein the protrusions are adapted to be moved into the slots, such that they push the substantially cylindrical objects out of the slots and onto the second conveyance means. This enables a safe ejection of the substantially cylindrical objects from the slots.

Furthermore, a comb can be used for pushing the substantially cylindrical objects from the first conveyance means into the slots. Alternatively, the substantially cylindrical objects can be pushed into the slots by the adjacent substantially cylindrical objects on the first conveyance means. Preferably the wheel is immobile during the transfer of the substantially cylindrical objects into the slots in the wheel and out of the slots in the wheel.

In another embodiment the rotation assembly comprises a plurality of wheels, each assigned to one of the plurality of first conveyance means. The wheels comprise a circumferential surface which is adapted to be in contact with an end surface of the substantially cylindrical objects during rotation. The rotation assembly further comprises parallel vertical channels, each assigned to one of the plurality of wheels, the vertical channels being adapted to receive the substantially cylindrical objects after rotation on the wheels. Preferably, the wheels are mounted on a rotational bearing without any driving means, such that they are idle. The circumferential surface of the wheel provides a contact and reference surface for the bottom end surface of the substantially cylindrical objects. This enables to precisely guide the rotation of the substantially cylindrical objects in contact with the circumferential surface of the wheel.

Preferably the rotation assembly comprises stationary guide elements, each of which circumferentially extends in a predetermined distance from each of the wheels to guide the substantially cylindrical objects during rotation. In particular, each guide element extends in a constant distance from the circumferential surface of the respective wheel. The guide elements enable to maintain the substantially cylindrical objects in close contact with the circumferential surface of the respective wheel.

The stationary guide elements may be adapted to engage the nappe of the substantially cylindrical objects. Preferably, the stationary guide elements engage in a portion of reduced diameter of the substantially cylindrical objects, in particular in a constriction in the substantially cylindrical objects. This allows maintaining the substantially cylindrical objects in a defined position while allowing easy rotation by means of the wheels. Alternatively, the stationary guide element can also engage an end surface of the substantially cylindrical objects during rotation, preferably the end surface opposed to the end surface which is in contact with the wheel.

Preferably at least one of the conveyance means is a stationary guide track. Preferably, pressurized air is provided to enable to convey the substantially cylindrical objects. For this purpose, one or more nozzles may be provided to apply pressurized air in a controlled manner to force the substantially cylindrical objects in the conveying direction.

Alternatively to providing pressurized air, a vacuum or negative pressure can be provided by air flow nozzles in the conveying means, such that the substantially cylindrical objects are conveyed by means of suction.

The conveyance means may also be a linear conveyor belt. The conveyor belt may be in direct contact with the nappe or an end surface of the substantially cylindrical objects. Further, the conveyor belt may comprise fingers which engage the substantially cylindrical objects. The fingers may be provided on a guide track as part of the conveyance means.

In a second embodiment, the second conveyance means may be a fluted drum, which is adapted to receive successively one substantially cylindrical object from each of the plurality of parallel vertical channels into a single flute. The flutes are recesses which extend in the outer circumferential surface of the drum, preferably in the axial direction of the drum. A plurality of flutes may be provided bordering to each other. Preferably the plurality of flutes may be provided on the entire circumferential surface of the drum. Thus, by rotation of the fluted drum the substantially cylindrical objects can be conveyed perpendicular to the longitudinal axis. This provides the benefit that a predetermined amount of aligned substantially cylindrical objects can be conveyed together and provided to downstream devices for further processing. In addition, fluted drums are already well known from filter combiner machines and are thus readily available at little cost.

Preferably, a plurality of hoppers are arranged between the plurality of vertical channels and the fluted drum, each of the plurality of hoppers being assigned to one of the plurality of vertical channels. According to the invention, the hoppers comprise side walls extending radially above the fluted drum and preferably in a circumferential direction of the fluted drum. The number of the plurality of hoppers corresponds to the number of vertical channels. The provision of hoppers above the fluted drum facilitates the placement of the substantially cylindrical objects into the flutes for a high speed application. The side walls separate the hoppers from each other. Preferably, the substantially cylindrical objects are arranged in between the side walls of the hopper with their longitudinal axis being perpendicular to the side walls of the hopper. Preferably, the spacing between the side walls is just slightly larger than the length of the substantially cylindrical objects along the longitudinal axis. This way, the substantially cylindrical objects are prevented from changing their orientation within the hopper. Preferably, the side walls are made from steel. Preferably, the side walls have a thickness of between about 0.5 mm and about 2.0 mm, more preferably between about 0.8 mm and about 1.2 mm and most preferably about 1 mm. This advantageously provides sufficient rigidity to the hoppers to prevent reorientation of the substantially cylindrical objects within the hopper. The hopper plurality has the advantage that the substantially cylindrical objects are provided to the plurality of flutes on the surface of the fluted drum around an entire section of the circumference of the fluted drum. That way, the substantially cylindrical objects have more time to settle into the flutes. Additionally, the fluted drum can be constantly turning such that this embodiment provides a continuous flow of aligned substantially cylindrical objects. The second embodiment can thus perform at higher speed.

At the same time, the thickness of the side walls prevents the formation of large gaps between the substantially cylindrical objects within the flutes. Preferably, a transfer chain with pushing fingers is arranged underneath the fluted drum in order to remove the aligned substantially cylindrical objects from the fluted drum. The pushing fingers on the transfer chain have a fixed spacing which is correlated to the size of other parts of the feeding apparatus to allow for an efficient synchronization within the feeding apparatus. Therefore, it is advantageous if the combined width of the hoppers do not exceed the spacing between the pushing fingers.

In this embodiment, preferably, at least one drum cam is provided along the circumference of the fluted drum such that the at least one drum cam is arranged to push the substantially cylindrical objects together inside the flute during the turning of the fluted drum. This advantageously reduces the gap between the substantially cylindrical objects within one flute such that the aligned objects easily fit between two pushing fingers of the transfer chain. This advantageously compensates for the gaps between substantially cylindrical objects within one flute caused by the width of the side walls of the hoppers. Preferably, one drum cam is provided on both sides of the fluted drum,

The feeding means is preferably at least one orbital bowl feeder that provides a plurality of lines of substantially cylindrical objects in a predefined orientation to the plurality of substantially parallel first conveyance means. The orientation of the substantially cylindrical objects in the orbital bowl feeder may be obtained by methods known in the art. Such methods include the use of specific guides and nozzles providing local airflows that push non-oriented objects back into the bowl. By an appropriate choice of the specific guides and nozzles providing local airflows it is possible that a single orbital bowl feeder feeds in some of the tracks substantially cylindrical objects that are oriented in a first orientation and in other of the tracks substantially cylindrical objects that are oriented in a second, opposite orientation. In that event the interlacing of two opposite oriented substantially cylindrical objects as described below can already be performed in the orbital bowl feeder.

Preferably, a filter material feeding means is arranged downstream of the interlacing apparatus and provides smoking article filter material in between the substantially cylindrical objects. Thus, the substantially cylindrical objects and the filter material form together the filter portion of a smoking article.

The invention further relates to a filter maker, particularly for the manufacture of smoking articles, wherein the filter maker comprises a feeding system according to the invention as described above.

The invention further relates to a method for feeding substantially cylindrical objects according to claim 11, wherein preferred embodiments of the method are defined in claims 12 and 13.

The invention will be further described, by way of example only, with reference to the accompanying drawings in which:
Figure 1 shows a perspective view of the feeding system according to an embodiment of the invention;
Figure 2 shows a magnified perspective view of the first conveyance means, the comb and the wheel of the feeding apparatus according to a first embodiment of the invention;
Figure 3 shows a magnified perspective view of the wheel and the second conveyance means of the feeding apparatus according to the first embodiment of the invention.
Figure 4 shows a plan view of the end of the second conveyance means and beginning of the third conveyance means in a feeding system according to an embodiment of the invention.
Figure 5 shows a plan view of the interlacing apparatus according to an embodiment of the invention;
Figure 6 shows a plan view of the arrangement and orientation of the first and second substantially cylindrical objects on the third conveyance means after the interlacing apparatus;
Figure 7 shows a magnified perspective view of the rotation assembly of a feeding apparatus according to a second embodiment;
Figure 8 shows a perspective view of the hopper of the feeding apparatus according to the second embodiment;
Figure 9 shows a cross-sectional view of the hopper and fluted drum of the feeding apparatus according to the second embodiment.

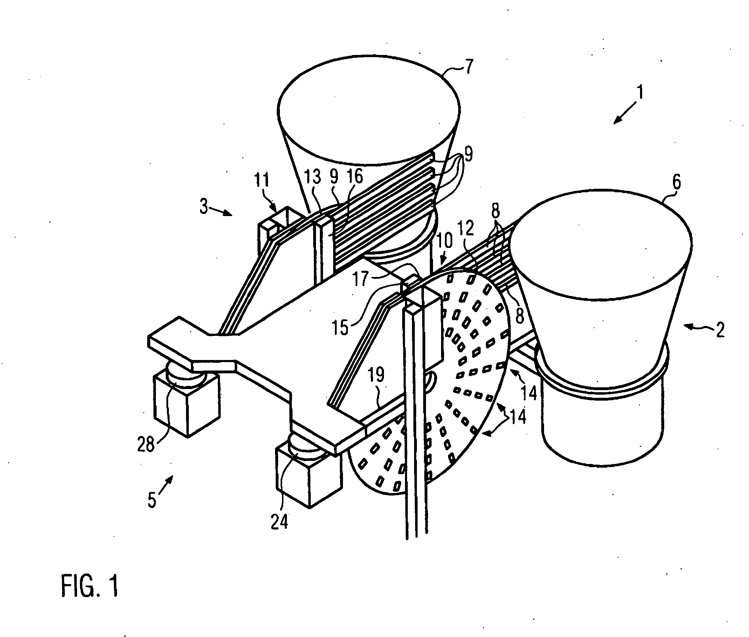

In Figure 1, a feeding system 1 according to a first embodiment of the invention is shown. The feeding system comprises two feeding apparatus 2, 3 which deliver substantially cylindrical objects 4 in different orientations to an interlacing apparatus 5.

The substantially cylindrical objects 4 are in particular non-cuttable elements of a filter of smoking articles, for example carbon cylinders or other non-cuttable objects. The substantially cylindrical objects 4 are asymmetric in their longitudinal extension, such that it is important to orient the objects before providing them to the interlacing apparatus 5. In the interlacing apparatus 5 the substantially cylindrical objects 4 of the first feeding apparatus 2 and the second feeding apparatus 3 are interlaced.

Each of the first and the second feeding apparatus 2, 3 comprises an orbital bowl feeder 6, 7 as a feeding means into which the substantially cylindrical objects 4 are initially provided without being oriented.

By means of rotational vibration of the orbital bowl feeders 6, 7 the substantially cylindrical objects move along spirally extending tracks on the inner side of the bowl of the orbital bowl feeders. The substantially cylindrical objects that are not correctly oriented are pushed back into the bowl by guides and airflow nozzles. In this embodiment, the orbital bowl feeders 6, 7 each comprise four tracks. The tracks are designed in order to provide from about 20 to one about 100 substantially cylindrical objects per minute. The end of each of the tracks of the orbital bowl feeders 6, 7 is connected to parallel first conveyance means 8, 9. The first conveyance means 8, 9 may comprise a portion which is connected to the orbital bowl feeder 6, 7 and a stationary portion, while the two portions are movable relative to each other to decouple the first conveyance means 8, 9 from the vibration of the orbital bowl feeder 6, 7.

In each feeding apparatus 4 the first conveyance means 8, 9 extend in between the orbital bowl feeder 6, 7 and a rotation assembly 10, 11. The rotation assemblies 10, 11 each comprise a wheel 12, 13 which is rotatable in its center around the horizontal axis. The wheel comprises a plurality of sets 14 of slots, wherein each set 14 comprises four radially aligned slots on the wheel 12.

Further, combs 15, 16 are provided which are adapted to push the substantially cylindrical objects 4 from the first conveyance means 8, 9 into the slots, by means of four protrusions 17, 18 of the comb 15, 16. Each of the protrusions 17, 18 is assigned to one of the first conveyance means 8, 9 and is in alignment with one of the slots of the set 14 of slots to which the substantially cylindrical objects are provided.

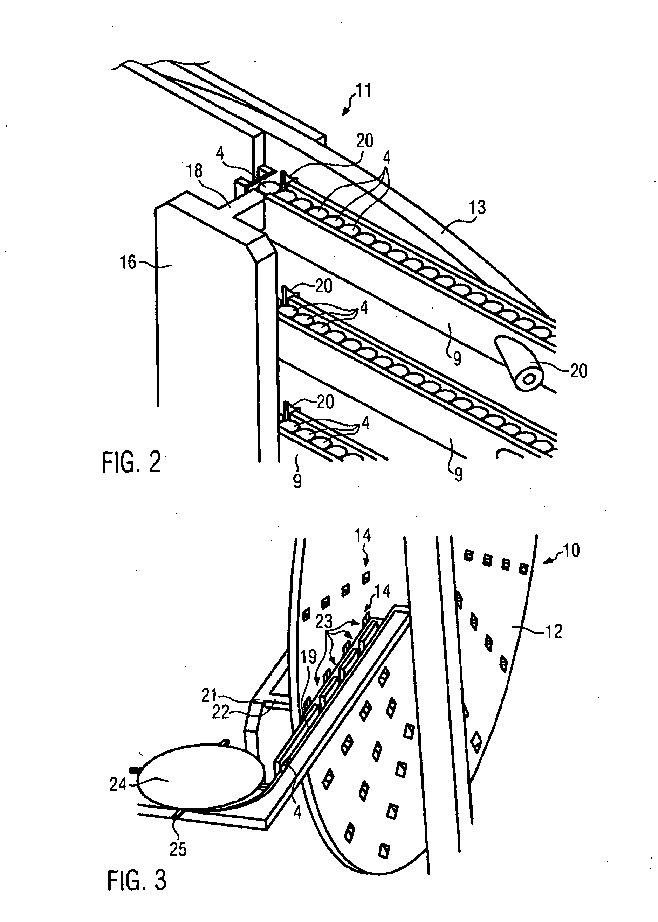

In Figure 2, the upper part of the rotation assembly 11 is shown in a perspective view, wherein the rotation assembly 10 and corresponding parts have generally the same setup. The oriented substantially cylindrical objects 4 can be seen within the first conveyance means 9. All substantially cylindrical objects are in an upright orientation in which they are standing on their lower end surface and are in contact with each other at their nappe. The substantially cylindrical objects 4 are conveyed by means of airflow nozzles 20 through which pressurized air is provided. Additionally or alternatively, the conveyance is effected by means of the upstream substantially cylindrical objects 4, which push the downstream substantially cylindrical objects 4. At the end of the first conveyance means 9 the comb 16 is provided comprising the plurality of protrusions 18 which push the most downstream substantially cylindrical object 4 of each first conveyance means 9 into a slot 20 of one set 14 of slots of the wheel 13. The wheel then rotates around 18 degrees, such that the next set 14 of slots is aligned with the comb 16 at the end of the first conveyance means 9 and the next substantially cylindrical objects 4 can be pushed into the slots 20.

The whole feeding system 1 as previously described may be driven by only one motor, in particular a brushless motor, and is otherwise mechanically synchronized, such that it can process the conveyance and orientation of the substantially cylindrical objects 4 at high speed. In particular the incremental rotation angle of the wheel 12, 13 is 18 degrees, while the predetermined rotation angle is 90 degrees. The incremental rotation angle corresponds to the angle in between two adjacent sets 14 of slots.

In Figure 3, a perspective view of the lower part of the rotation assembly 10 is shown together with the second conveyance means 19. It is emphasized that the general setup of the interaction in between the rotation assembly 11 and the corresponding second conveyance means is substantially of the same design. The wheel 12 is rotated around the incremental rotation angle of 18 degrees, such that a set 14 of slots, is brought into alignment with the second conveyance means 19. A comb 21 is provided, which is adapted to contact the substantially cylindrical objects 4 in the slot of the set 14 of slots and to push the substantially cylindrical objects 4 onto the second conveyance means 19. As the second conveyance means 19 generally extends in a horizontal direction, the set 14 of slots is rotated into a substantially horizontal orientation. The set 14 of slots is then in alignment with the second conveyance means. The comb comprises four protrusions 22, each of which is adapted to push one of the substantially cylindrical objects 4 out of one of the slots of the set 14 of slots. The sidewall of the second conveyance means 19 comprises four openings 23 through which the substantially cylindrical objects can be pushed to be received and further conveyed by the second conveyance means 19. The transfer of the cylindrical objects 4 into the set 14 of slots and out of the set 14 of slots is effected while the wheels 12, 13 stand still.

Thus, the previously upright-oriented substantially cylindrical objects in the plurality of first conveyance means can be joined and aligned in a second conveyance means for further processing.

The substantially cylindrical objects 4 may be conveyed on the second conveyance means by means of airflow nozzles subjected to pressurized air as previously described. Alternatively or in addition, the substantially cylindrical objects 4 may be conveyed on the second conveyance means by means of a chain which comprises protruding fingers that engage at least some or all of the substantially cylindrical objects 4. Alternatively or additionally, airflow nozzles may be provided that are connected to a vacuum or low pressure generator such that suction is created on the second conveyance means to transport the substantially cylindrical objects 4. The second conveyance means 19 terminates at a conveyance disk 24 which comprises a plurality of conveyance fingers 25 which are adapted to engage the respective most downstream substantially cylindrical object and translate and rotate the substantially cylindrical object 4 onto the third conveyance means (not shown in Figure 3).

Generally, it is emphasized that the orbital bowl feeder 6 of the first feeding apparatus 2 and the orbital bowl feeder 7 of the second feeding apparatus 3 provide the substantially cylindrical objects 4 in different orientations in the upright position, such that the longitudinal axes of the substantially cylindrical objects on the first conveyance means 8 extend in the opposite direction from the longitudinal axes of the substantially cylindrical objects on the first conveyance means 9. Thus, as described in the following, differently oriented substantially cylindrical objects can be joined in the interlacing apparatus 5. Alternatively, by an appropriate choice of the specific guides and nozzles providing local airflows in an orbital bowl feeder 7 it is possible that a single orbital bowl 7 feeder feeds in some of the tracks substantially cylindrical objects 4 that are oriented in a first orientation and in other in tracks substantially cylindrical objects 4 that are oriented in a second, opposite orientation. In that event the interlacing of two opposite oriented substantially cylindrical objects 4 as described below can already be performed in the orbital bowl feeder 7. The differently oriented objects may be conveyed on different first conveyance means 8, such that the interlacing is carried out by means of the wheel 12.

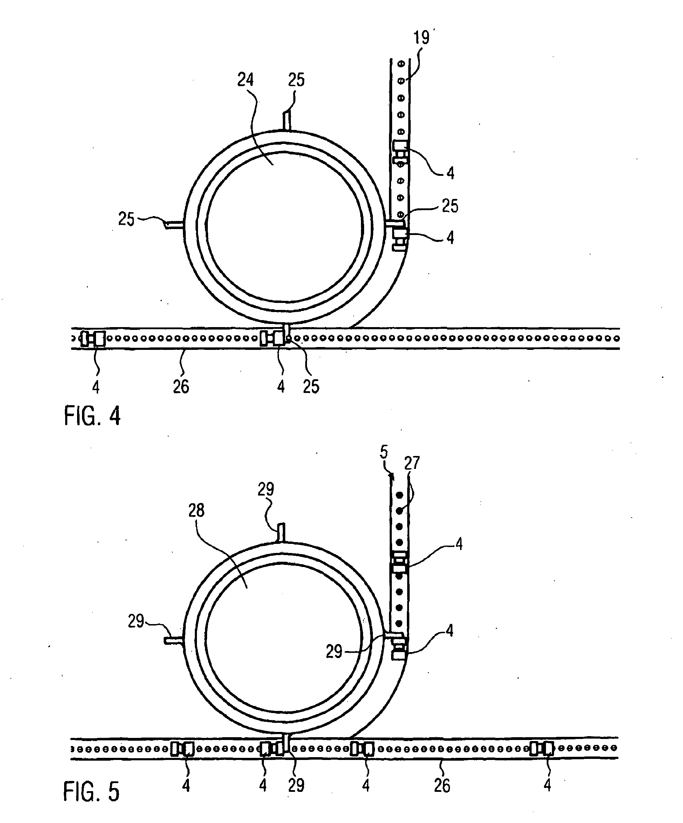

In Figure 4, the downstream end of the second conveyance means 19 and the conveyance disc 24 are shown in a plan view. It can be seen that the substantially cylindrical objects are all in the same orientation, wherein the constriction is provided closer to the downstream end of the substantially cylindrical objects. At the end of the second conveyance means 19, the substantially cylindrical objects 4 are engaged in their upstream end surface by the finger 25 of the conveyance disc 24 and are rotated and translated to the third conveyance means 26. On the third conveyance means, the substantially cylindrical objects are further conveyed until they are joined in the interlacing apparatus 5 with the opposite oriented substantially cylindrical objects as shown in the plan view of Figure 5.

In Figure 5, the downstream end of the second conveyance means 27 is shown. The second conveyance means 27 is arranged in a similar manner with respect to the wheel 13 as the second conveyance means 19 is arranged with respect to the wheel 12. Thus, on the second conveyance means 27, oriented and axially aligned substantially cylindrical objects are conveyed.

At the downstream end of the second conveyance means 27, the substantially cylindrical objects 4 will be engaged by conveyance fingers 29 of a conveyance disc and translated and rotated onto the third conveyance means 26 in between two substantially cylindrical objects 4 already provided on the third conveyance means 26 by the conveyance disc 24. Thus, as shown in Figure 5, the substantially cylindrical objects 4 will be provided in alternating orientation on the third conveyance means while being aligned in their longitudinal axis. The substantially cylindrical objects 4 are conveyed in a lying orientation on the third conveyance means 26, such that the nappe contacts third conveyance means 26.

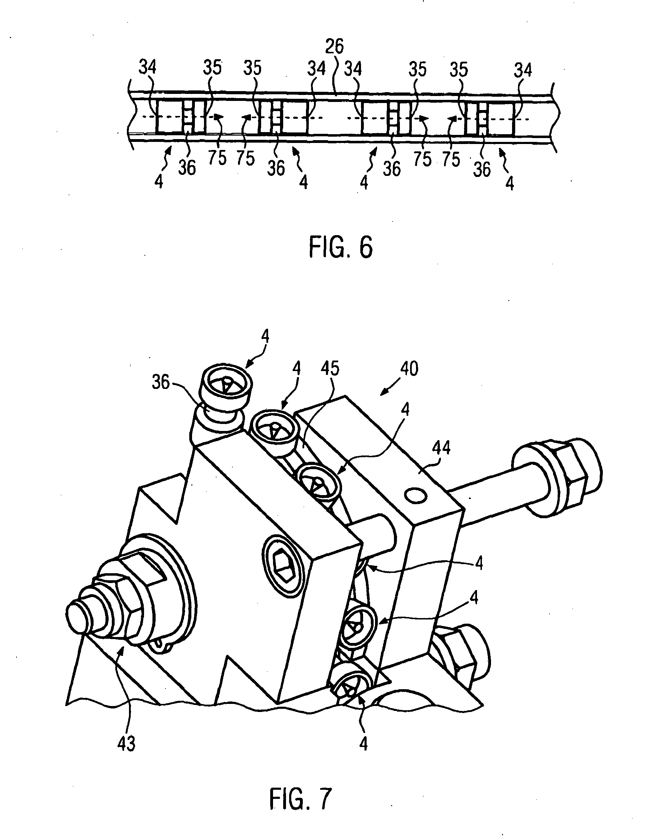

The alternating arrangement of the substantially cylindrical objects 4 on the third conveyance means 26 is shown in more detail in Figure 6. Each of the substantially cylindrical objects 4 comprises two substantially flat end surfaces 34, 35 and a constriction 36, respectively a section of reduced diameter, in between the end surfaces 34, 35. The substantially cylindrical objects 4 are not symmetrical along their longitudinal axis 75 such that the end section of the nappe which is closer to the end surface 34 is longer than the end section of the nappe which is closer to the end surface 35.

After or on the third conveyance means 26, a filter material element can be inserted in between two substantially cylindrical objects 4, such that the combination of two substantially cylindrical objects 4 and one filter material element, after being cut into two pieces, forms the filter of a smoking article. Alternatively, the substantially cylindrical elements may be inserted into spaces, that is empty areas, in so called plug-space-plug filter arrangements.

In Figure 7, a perspective view of a part of a rotation assembly 40 is shown which relates to a second embodiment of the invention. At the end of the first conveyance means the rotation assembly 40 may provided as an alternative to the aforementioned rotation assembly 10, 11. The rotation assembly 40 rotates each of the substantially cylindrical objects 4 around a predetermined rotation angle and provides them into parallel vertical channels 41. The substantially cylindrical objects 4 are in particular in a lying position in the vertical channels 41 such that their longitudinal axis extends horizontally. The vertical channels 41 are adapted to maintain the orientation of substantially cylindrical objects 4 by providing guide means which in particular engage in the constriction 36 of the substantially cylindrical objects 4. Alternatively, the guide means engage at the end surface 34, 35 of the substantially cylindrical objects 4.

At the end of the parallel vertical channels 41 which are part of the rotation assembly 40, the substantially cylindrical objects 4 are aligned in their longitudinal axes and can be provided to a second conveyance means for further processing.

The rotation assembly 40 comprises a plurality of wheels which are mounted with idle mounts 43 on a support structure 44 of the rotation assembly 40. The wheels may freely rotate around the horizontal axis. The stationary support structure 44 further comprises stationary guide elements 45 which are adapted to engage in the constrictions 36 of the substantially cylindrical objects 4. Thus, the substantially cylindrical objects 4 are in contact with the circumferential surface of the idle wheels with their bottom surface and are guided by the guide elements 45 of the support structure during rotation. For each first conveyance means, a support structure 44 with a wheel and a guide element 45 is provided. Thus, a plurality of lines of parallel vertical channels 41 can be provided with rotated substantially cylindrical objects 4.

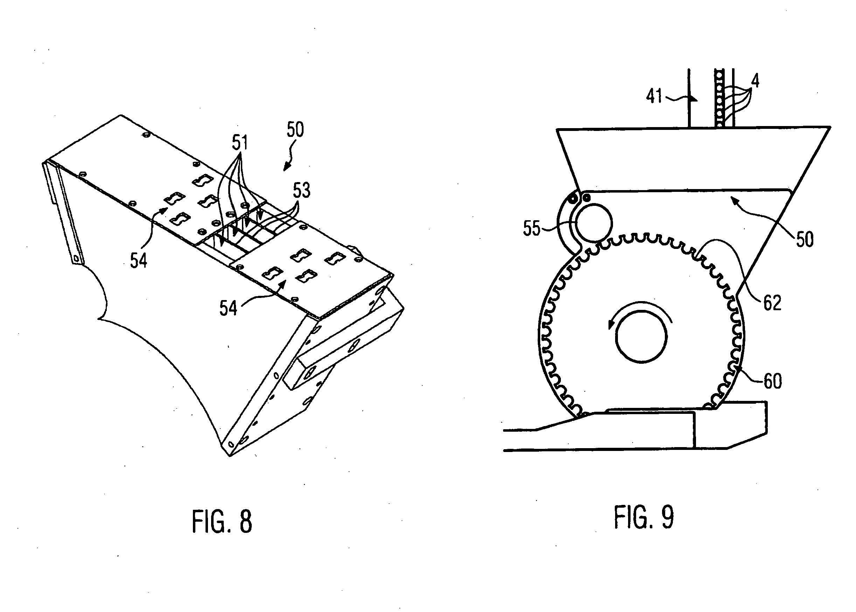

Figure 8 shows a hopper plurality 50 of four hoppers 51. The hopper plurality 50 is arranged above the second conveyance means 60. Each of the hoppers 51 is separated from the adjacent hopper 51 by a side wall 53. The width of a hopper 51 is slightly larger than the length of the substantially cylindrical objects 4. The width of the side wall 53 is about 1 mm. The side wall 53 is made from steel. The hopper plurality 50 comprises an opening through which the substantially cylindrical objects 4 are supplied from the vertical channels 41. In addition, each hopper 51 is associated with two manual feeding slots 54.

In this second embodiment the second conveyance means is a fluted drum 60 to which the plurality of aligned substantially cylindrical objects 4 from the hopper plurality 50 are provided. As shown in Figure 9, an agitation roller 55 is associated with the hopper plurality 50 in order to agitate the substantially cylindrical objects 4 within the hoppers 51. This facilitates that the substantially cylindrical objects 4 settle into the flutes 62 of the fluted drum 60. Due to the side walls 53 of the hopper plurality 50, the substantially cylindrical objects 4 are slightly spaced apart within the flutes 62. A drum cam is provided (not shown) on each of the sides of the fluted drum 60. The drum cams nudge the substantially cylindrical objects 4 towards each other during the circumferential movement of the substantially cylindrical objects 4 while the fluted drum 60 turns.

A linear conveyance means is provided downstream of the fluted drum 60. The linear conveyance means is in alignment with the plurality of substantially cylindrical objects 4 provided in a flute 62 of the fluted drum 60. The substantially cylindrical objects 4 can be conveyed from the fluted drum 60 to the linear conveyance means by suction, pressurized air or by pushing fingers (not shown).

The second embodiment of the feeding apparatus can be used in the feeding system according to the invention either by using two feeding apparatuses according to the second embodiment or by using one feeding apparatus 2, 3 according to the first embodiment and one feeding apparatus according to the second embodiment. In addition, the feeding apparatus may comprise 4, 6 or 8 orbital bowl feeders if higher feeding rates are required.

## Claims

1. Feeding system (1) comprising a first and a second feeding apparatus (2, 3) for providing substantially cylindrical objects (4), wherein the substantially cylindrical objects (4) comprise a longitudinal axis (75), and the substantially cylindrical objects (4) are asymmetric along their longitudinal axis (75), **characterized in that**
the first and the second feeding apparatus (2, 3) each comprise:
a feeding means (6, 7) to which a plurality of substantially parallel first conveyance means (8, 9) are connected, wherein the feeding means (6, 7) is adapted to provide the substantially cylindrical objects (4) to each of the first conveyance means (8, 9) in a substantially upright orientation, wherein in the upright orientation the longitudinal axes (75) of the substantially cylindrical objects (4) are substantially perpendicular to the transport direction of the first conveyance means (8, 9), and
a rotation assembly (10, 11, 40) which is adapted to receive the substantially cylindrical objects (4) from the first conveyance means (8, 9), and wherein the rotation assembly (10, 11, 40) is adapted to change the orientation of the longitudinal axis (75) of each of the substantially cylindrical objects (4) by the same predetermined rotation angle,
wherein the rotation assembly (10, 11, 40) is further adapted to provide the substantially cylindrical objects (4) to a second conveyance means (19, 27), such that the longitudinal axes (75) of respectively one substantially cylindrical object (4) from each of the plurality of substantially parallel first conveyance means (8, 9) are aligned with each other in a single line on the second conveyance means (19, 27);
wherein the feeding means (6) of the first feeding apparatus (2) is adapted to provide the substantially cylindrical objects (4) in a first orientation and the feeding means (7) of the second feeding apparatus (3) is adapted to provide the substantially cylindrical objects (4) in a second orientation, such that the substantially cylindrical objects (4) in the first orientation and second orientation have parallel longitudinal axes (75) which extend into opposite directions, and
wherein an interlacing apparatus (5) is adapted to successively provide first a substantially cylindrical object (4) in the first orientation and then a substantially cylindrical object (4) in the second orientation on a third conveyance means (26).

2. Feeding system according to claim 1, wherein the rotation assembly (10, 11, 40) comprises at least one wheel (12, 13) which enables to rotate the substantially cylindrical objects (4) around the predetermined rotation angle.

3. Feeding system according to claim 2, wherein the wheel (12, 13) comprises a set (14) of slots (20), which are arranged at different radial positions and in radial alignment with each other, wherein the slots (20) are adapted to receive the substantially cylindrical objects (4) in a substantially upright orientation, and rotate with the wheel (12, 13) about the predetermined rotation angle, and wherein the second conveyance means is adapted to receive the substantially cylindrical objects (4) after rotation of the wheel (12, 13) around the predetermined rotation angle.

4. Feeding system according to claim 2, wherein the rotation assembly (40) comprises a plurality of wheels, each assigned to one of the first conveyance means, the wheels comprising a circumferential surface which is adapted to be in contact with an end surface of the substantially cylindrical objects (4) during rotation, and wherein the rotation assembly (40) further comprises a plurality of parallel vertical channels (41), each assigned to one of the plurality of wheels, the plurality of vertical channels (41) being adapted to receive the substantially cylindrical objects after rotation on the wheels.

5. Feeding system according to claim 4, wherein the second conveyance means is a fluted drum (60), which is adapted to receive respectively one substantially cylindrical object (4) from each of the plurality of parallel vertical channels (41) into a single flute (62).

6. Feeding system according to claim 5, wherein a plurality of hoppers (50) are arranged between the plurality of vertical channels (41) and the fluted drum (60), each of the plurality of hoppers (50) being assigned to one of the plurality of vertical channels (41), the hoppers comprising side walls (53) extending radially above the fluted drum (60).

7. Feeding system according to claim 5 or 6, comprising at least one drum cam provided along the circumference of the fluted drum (60), wherein the at least one drum cam is arranged to push the substantially cylindrical objects (4) towards another inside the flute (62) during the turning of the fluted drum (60) in order to reduce a gap between the substantially cylindrical objects (4).

8. Feeding system according to one of the previous claims, wherein the feeding means (6, 7) comprises at least one orbital bowl feeder.

9. Feeding system according to one of the previous claims, wherein a filter material feeding means is arranged downstream of the interlacing apparatus (5) and adapted to provide smoking article filter material in between the substantially cylindrical objects (4).

10. Filter maker comprising a feeding system according to one of the previous claims.

11. Method for feeding substantially cylindrical objects (4), wherein the substantially cylindrical objects (4) comprise a longitudinal axis (75), and wherein the substantially cylindrical objects (4) are asymmetric along their longitudinal axis (75), **characterized in that** the method comprises the following steps carried out by a first and a second feeding apparatus (2, 3), respectively:
i) providing objects (4) by means of a feeding means (6, 7) to a plurality of substantially parallel first conveyance means (8, 9) in a substantially upright orientation, wherein in the upright orientation the longitudinal axes (75) of the substantially cylindrical objects (4) are substantially perpendicular to the transport direction of the first conveyance means (8, 9);
ii) conveying the objects (4) on the plurality of substantially parallel first conveyance means (8, 9);
iii) rotating the objects by means of a rotation assembly (10, 11, 40) which receives the substantially cylindrical objects (4) from the first conveyance means (8, 9), and wherein the rotation assembly (10, 11, 40) changes the orientation of the longitudinal axis (75) of each of the substantially cylindrical objects (4) by the same predetermined rotation angle;
iv) providing the substantially cylindrical objects (4) from the rotation assembly (10, 11, 40) to a second conveyance means (19, 27), such that the longitudinal axes (75) of respectively one substantially cylindrical object (4) from each of the plurality of substantially parallel first conveyance means (8, 9) are aligned with each other in a single line on the second conveyance means (19, 27), wherein the feeding means (6) of the first feeding apparatus (2) provides the substantially cylindrical objects (4) in a first orientation and the feeding means (7) of the second feeding apparatus (3) provides the substantially cylindrical objects (4) in a second orientation, such that the substantially cylindrical objects (4) in the first orientation and second orientation have parallel longitudinal axes (75) which extend into opposite directions;
wherein the method further comprises the step:
v) interlacing successively first a substantially cylindrical object (4) in the first orientation and then a substantially cylindrical object (4) in the second orientation on a third conveyance means (26) by means of an interlacing apparatus (5).

12. Method according to claim 11, wherein step iii) comprises:
receiving the substantially cylindrical objects (4) in a substantially upright orientation in the slots (20) of a set (14) of slots (20) arranged at different radial positions and in radial alignment with each other in a wheel (12, 13);
rotating the substantially cylindrical objects (4) about the predetermined rotation angle by means of the wheel (12, 13); and
receiving the substantially cylindrical objects (4) by means of the second conveyance means (19, 27) after rotation of the wheel (12, 13) about the predetermined rotation angle.

13. Method according to claim 11, wherein step iv) comprises: receiving respectively one substantially cylindrical object (4) from each of a plurality of parallel vertical channels into a single flute (62) of a fluted drum (60), which forms the second conveyance means.

## Patentansprüche

1. Zuführsystem (1), umfassend eine erste und eine zweite Zuführvorrichtung (2, 3) zum Bereitstellen im wesentlichen zylindrischer Objekte (4), wobei die im wesentlichen zylindrischen Objekte (4) eine Längsachse (75) haben und die im wesentlichen zylindrischen Objekte (4) entlang ihrer Längsachse (75) asymmetrisch sind, **dadurch gekennzeichnet, dass** die erste und die zweite Zuführvorrichtung (2, 3) jeweils umfassen:
eine Zuführeinrichtung (6, 7), mit der eine Vielzahl im wesentlichen paralleler erster Fördereinrichtungen (8, 9) verbunden ist, wobei die Zuführeinrichtung (6, 7) dazu eingerichtet ist, die im wesentlichen zylindrischen Objekte (4) jeder der ersten Fördereinrichtungen (8, 9) in einer im wesentlichen aufrechten Ausrichtung bereitzustellen, wobei in der aufrechten Ausrichtung die Längsachsen (75) der im wesentlichen zylindrischen Objekte (4) im wesentlichen senkrecht zu der Transportrichtung der ersten Fördereinrichtungen (8, 9) sind, und
eine Rotationseinrichtung (10, 11, 40), die dazu eingerichtet ist, die im wesentlichen zylindrischen Objekte (4) von den ersten Fördereinrichtungen (8, 9) aufzunehmen, wobei die Rotationsanordnung (10, 11, 40) dazu eingerichtet ist, die Ausrichtung der Längsachsen (75) jedes der im wesentlichen zylindrischen Objekte (4) um denselben vorbestimmten Rotationswinkel zu ändern,
wobei die Rotationsanordnung (10, 11, 40) weiterhin dazu eingerichtet ist, die im wesentlichen zylindrischen Objekte (4) einer zweiten Fördereinrichtung (19, 27) derart bereitzustellen, dass jeweils die Längsachsen (75) der im wesentlichen zylindrischen Objekte (4) aus der Vielzahl der im wesentlichen parallelen ersten Fördereinrichtungen (8, 9) zueinander in einer einzelnen Linie auf der zweiten Fördereinrichtung (19, 27) ausgerichtet sind;
die Zuführeinrichtung (6) der ersten Zuführvorrichtung (2) dazu eingerichtet ist, die im wesentlichen zylindrischen Objekte (4) in einer ersten Ausrichtung bereitzustellen, und die Zuführeinrichtung (7) der zweiten Zuführeinrichtung (3) dazu eingerichtet ist, die im wesentlichen zylindrischen Objekte (4) in einer zweiten Ausrichtung bereitzustellen, so dass die im wesentlichen zylindrischen Objekte (4) in der ersten Ausrichtung und der zweiten Ausrichtung parallele Längsachsen (75) haben, die sich in entgegengesetzte Richtungen erstrecken, und
eine Verschachtelungsvorrichtung (5) dazu eingerichtet ist, nacheinander zuerst ein im wesentlichen zylindrisches Objekt (4) in der ersten Ausrichtung und anschließend ein im wesentlichen zylindrisches Objekt (4) in der zweiten Ausrichtung auf einer dritten Fördereinrichtung (26) bereitzustellen.

2. Zuführsystem nach Anspruch 1, bei dem die Rotationsanordnung (10, 11, 40) wenigstens ein Rad (12, 13) umfasst, das eine Drehung der im wesentlichen zylindrischen Objekte (4) um den vorbestimmten Rotationswinkel umfasst.

3. Zuführsystem nach Anspruch 2, bei dem das Rad (12, 13) einen Satz (14) von Schlitzen (20) umfasst, die in unterschiedlichen radialen Positionen und radialer Ausrichtung zueinander angeordnet sind, wobei die Schlitze dazu eingerichtet sind, die im wesentlichen zylindrischen Objekte (4) in einer im wesentlichen aufrechten Ausrichtung aufzunehmen und sich mit dem Rad (12, 13) um den vorbestimmten Rotationswinkel zu drehen, und die zweite Fördereinrichtung dazu eingerichtet ist, die im wesentlichen zylindrischen Objekte (4) nach der Drehung des Rades (12, 13) um den vorbestimmten Rotationswinkel aufzunehmen.

4. Zuführsystem nach Anspruch 2, bei dem die Rotationsanordnung (40) eine Vielzahl von Rädern umfasst, die jeweils einer der ersten Fördereinrichtungen zugeordnet sind, wobei die Räder eine Umfangsfläche haben, die dazu eingerichtet ist, mit einer Stirnfläche der im wesentlichen zylindrischen Objekte (4) während der Drehung in Kontakt zu sein, und die Rotationsanordnung (40) weiterhin eine Vielzahl paralleler vertikaler Kanäle (41) umfasst, die jeweils einem der Vielzahl von Rädern zugeordnet sind, wobei die Vielzahl der vertikalen Kanäle (41) dazu eingerichtet ist, die im wesentlichen zylindrischen Objekte nach der Drehung auf den Rädern aufzunehmen.

5. Zuführvorrichtung nach Anspruch 4, bei der die zweite Fördereinrichtung eine gerillte Trommel (60) ist, die dazu eingerichtet ist, jeweils ein im wesentlichen zylindrisches Objekt (4) aus jedem aus der Vielzahl von parallelen vertikalen Kanälen (41) in einer einzelnen Rille (62) aufzunehmen.

6. Zuführsystem nach Anspruch 5, bei dem eine Vielzahl von Trichtern (50) zwischen der Vielzahl vertikaler Kanäle (41) und der gerillten Trommel (60) angeordnet ist, wobei jeder aus der Vielzahl von Trichtern (50) einem aus der Vielzahl von vertikalen Kanälen (41) zugeordnet ist und die Trichter Seitenwände (53) umfassen, die sich radial über der gerillten Trommel (60) erstrecken.

7. Zuführsystem nach Anspruch 5 oder 6, umfassend wenigstens eine Trommelnocke, die entlang des Umfangs der gerillten Trommel (60) angeordnet ist, wobei die wenigstens eine Trommelnocke derart angeordnet ist, dass sie die im wesentlichen zylindrischen Objekte (4) in der Rille (62) während des Drehens der gerillten Trommel (60) zusammenschiebt, um einen Spalt zwischen den im wesentlichen zylindrischen Objekten (4) zu verringern.

8. Zuführsystem nach einem der vorhergehenden Ansprüche, bei dem die Zuführeinrichtung (6, 7) wenigstens eine kreisförmige Schalenzuführeinrichtung umfasst.

9. Zuführsystem nach einem der vorherigen Ansprüche, bei dem eine Filtermaterial-Zuführeinrichtung stromabwärts der Verschachtelungsvorrichtung (5) angeordnet und dazu eingerichtet ist, ein Raucherzeugnis-Filtermaterial zwischen den im wesentlichen zylindrischen Objekten (4) bereitzustellen.

10. Filterherstellungsvorrichtung, umfassend ein Zuführsystem nach einem der vorhergehenden Ansprüche.

11. Verfahren zum Zuführen im wesentlichen zylindrischer Objekte (4), wobei die im wesentlichen zylindrischen Objekte (4), eine Längsachse (75) haben und die im wesentlichen zylindrischen Objekte (4) entlang ihrer Längsachse (75) asymmetrisch sind, **dadurch gekennzeichnet, dass** das Verfahren die folgenden Schritte umfasst, die von einer ersten bzw. einer zweiten Zuführvorrichtung (2, 3) ausgeführt werden:
i) Bereitstellen von Objekten (4) mit Hilfe einer Zuführeinrichtung (6, 7) für eine Vielzahl von im wesentlichen parallelen ersten Fördereinrichtungen (8, 9) in einer im wesentlichen aufrechten Ausrichtung, wobei in der aufrechten Ausrichtung die Längsachsen (75) der im wesentlichen zylindrischen Objekte (4) im wesentlichen senkrecht zu der Transportrichtung der ersten Fördereinrichtungen (8, 9) sind;
ii) Befördern der Objekte (4) auf der Vielzahl der im wesentlichen parallelen ersten Fördereinrichtungen (8, 9);
iii) Drehen der Objekte mit Hilfe einer Rotationsanordnung (10, 11, 40), die die im wesentlichen zylindrischen Objekte (4) von den ersten Fördereinrichtungen (8, 9) aufnimmt, wobei die Rotationseinrichtung (10, 11, 40) die Ausrichtung der Längsachsen (75) jedes der im wesentlichen zylindrischen Objekte (4) um denselben Rotationswinkel ändert;
iv) Bereitstellen der im wesentlichen, zylindrischen Objekte (4) aus der Rotationsanordnung (10, 11, 40) für eine zweite Fördereinrichtung (19, 27) derart, dass jeweils die Längsachse (75) der im wesentlichen zylindrischen Objekte (4) aus jeder der Vielzahl von im wesentlichen parallelen ersten Fördereinrichtungen (8, 9) zueinander in einer einzigen Linie auf der zweiten Fördereinrichtung (19, 27) ausgerichtet werden, wobei die Zuführeinrichtung (6) der ersten Zuführvorrichtung (2) die im wesentlichen zylindrischen Objekte (4) in einer ersten Ausrichtung bereitstellt und die Zuführeinrichtung (7) der zweiten Zuführvorrichtung (3) die im wesentlichen zylindrischen Objekte (4) in einer zweiten Ausrichtung bereitstellt, so dass die im wesentlichen zylindrischen Objekte (4) in der ersten Ausrichtung und der zweiten Ausrichtung parallele Längsachsen (75) haben, die sich in entgegengesetzte Richtungen erstrecken;
wobei das Verfahren weiterhin folgenden Schritt umfasst:
v) nacheinander Verschachteln zunächst eines im wesentlichen zylindrischen Objektes (4) in der ersten Ausrichtung und dann eines im wesentlichen zylindrischen Objekt (4) in der zweiten Ausrichtung auf einer dritten Fördereinrichtung (26) mit Hilfe einer Verschachtelungsvorrichtung (5).

12. Verfahren nach Anspruch 11, bei dem Schritt iii) umfasst:
Aufnehmen der im wesentlichen zylindrischen Objekte (4) in einer im wesentlichen aufrechten Ausrichtung in den Schlitzen (20) eines Satzes (14) von Schlitzen (20), die an unterschiedlichen Radialpositionen und in radialer Ausrichtung zueinander in einem Rad (12, 13) angeordnet sind;
Drehen der im wesentlichen zylindrischen Objekte (4) um den vorbestimmten Rotationswinkel mit Hilfe des Rades (12, 13); und
Aufnehmen der im wesentlichen zylindrischen Objekte (4) mit Hilfe der zweiten Fördereinrichtung (19, 27) nach der Drehung des Rades (12, 13) um den vorbestimmten Rotationswinkel.

13. Verfahren nach Anspruch 11, bei dem Schritt iv) umfasst: Aufnehmen jeweils eines im wesentlichen zylindrischen Objektes (4) aus jedem einer Vielzahl von parallelen vertikalen Kanälen in eine einzelne Rille (62) einer gerillten Trommel (60), die die zweite Fördereinrichtung bildet.

## Revendications

1. Système d'alimentation (1) comprenant un premier et un second appareil d'alimentation (2, 3) pour disposer des objets sensiblement cylindriques (4), dans lequel les objets sensiblement cylindriques (4) comportent un axe longitudinal (75) et les objets sensiblement cylindriques (4) sont asymétriques suivant leur axe longitudinal (75), **caractérisé en ce que :**
- les premier et second appareils d'alimentation (2, 3) comprennent chacun :
- des moyens d'alimentation (6, 7) auxquels une pluralité de premiers moyens de convoyage sensiblement parallèles (8, 9) sont reliés, dans lequel les moyens d'alimentation (6, 7) sont adaptés à délivrer les objets sensiblement cylindriques (4) à chacun des premiers moyens de convoyage (8, 9) dans une orientation sensiblement verticale, dans lequel dans cette orientation verticale les axes longitudinaux (75) des objets sensiblement cylindriques (4) sont sensiblement perpendiculaires à la direction de transport des premiers moyens de convoyage (8, 9) ; et
- un ensemble rotatif (10, 11, 40) adapté à recevoir les objets sensiblement cylindriques (4) provenant des premiers moyens de convoyage (8, 9) et dans lequel l'ensemble rotatif (10, 11, 40) est adapté à changer l'orientation de l'axe longitudinal (75) de chacun des objets sensiblement cylindriques (4) d'un même angle de rotation prédéterminé ;
- dans lequel l'ensemble rotatif (10, 11, 40) est, en outre, adapté à délivrer les objets sensiblement cylindriques (4) à de seconds moyens de convoyage (19, 27), de sorte que les axes longitudinaux (75) d'un objet sensiblement cylindrique (4) respectif provenant de chaque moyen de la pluralité de premiers moyens de convoyage sensiblement parallèles (8, 9) soient alignés les uns relativement aux autres en une ligne unique sur les seconds moyens de convoyage (19, 27) ;
- dans lequel les moyens d'alimentation (6) du premier appareil d'alimentation (2) sont adaptés à disposer les objets sensiblement cylindriques (4) dans une première orientation et les moyens d'alimentation (7) du second appareil d'alimentation (3) sont adaptés à disposer les objets sensiblement cylindriques (4) dans une seconde orientation, de sorte que les objets sensiblement cylindriques (4) dans la première orientation et la seconde orientation aient des axes longitudinaux (75) parallèles s'étendant dans des directions opposées ; et
- dans lequel un appareil d'intercalage (5) est adapté à successivement délivrer d'abord un objet sensiblement cylindrique (4) dans la première orientation, puis un objet sensiblement cylindrique (4) dans la seconde orientation sur de troisièmes moyens de convoyage (26).

2. Système d'alimentation selon la revendication 1, dans lequel l'ensemble rotatif (10, 11, 40) comprend au moins une roue (12, 13) permettant d'entrainer en rotation les objets sensiblement cylindriques (4) de l'angle de rotation prédéterminé.

3. Système d'alimentation selon la revendication 2, dans lequel la roue (12, 13) comprend un jeu (14) d'emplacements (20), disposés à des positions radiales différentes et dans un alignement radial les uns relativement aux autres, dans lequel les emplacements (20) sont adaptés à recevoir les objets sensiblement cylindriques (4) dans une orientation sensiblement verticale et à entrer en rotation avec la roue (12, 13) de l'angle de rotation prédéterminé, et dans lequel les seconds moyens de convoyage sont adaptés à recevoir les objets sensiblement cylindriques (4) après une rotation de la roue (12, 13) de l'angle de rotation prédéterminé.

4. Système d'alimentation selon la revendication 2, dans lequel l'ensemble rotatif (40) comprend une pluralité de roues, chacune assignée à un des premiers moyens de convoyage, les roues comprenant une surface circonférentielle adaptée à être au contact d'une surface d'extrémité des objets sensiblement cylindriques (4) au cours d'une rotation et dans lequel l'ensemble rotatif (40) comprend, en outre, une pluralité de canaux verticaux parallèles (41), chacun assigné à une roue de la pluralité de roues, la pluralité de canaux verticaux (41) étant adaptée à recevoir les objets sensiblement cylindriques après une rotation sur les roues.

5. Système d'alimentation selon la revendication 4, dans lequel les seconds moyens de convoyage sont un tambour cannelé (60) adapté à recevoir respectivement un objet sensiblement cylindrique (4) provenant de chaque canal de la pluralité de canaux verticaux parallèles (41) dans une unique cannelure (62).

6. Système d'alimentation selon la revendication 5, dans lequel une pluralité d'auges (50) sont disposées entre la pluralité de canaux verticaux (41) et le tambour cannelé (60), chaque auge de la pluralité d'auges (50) étant assignée à un canal de la pluralité de canaux verticaux (41), les auges comprenant des parois latérales (53) s'étendant radialement au-dessus du tambour cannelé (60).

7. Système d'alimentation selon les revendications 5 ou 6, comprenant au moins une came de tambour disposée suivant la circonférence du tambour cannelé (60), dans lequel l'au moins une came de tambour est agencée pour pousser les objets sensiblement cylindriques (4) les uns vers les autres à l'intérieur de la cannelure (62) durant la rotation du tambour cannelé (60) afin de réduire un intervalle entre les objets sensiblement cylindriques (4).

8. Système d'alimentation selon l'une des revendications précédentes, dans lequel les moyens d'alimentation (6, 7) comprennent au moins un dispositif d'alimentation en bol orbital.

9. Système d'alimentation selon l'une des revendications précédentes, dans lequel des moyens d'alimentation en matériau de filtre sont agencés en aval de l'appareil d'intercalage (5) et adaptés à délivrer un matériau de filtre d'article à fumer entre les objets sensiblement cylindriques (4).

10. Appareil de fabrication de filtre comprenant un système d'alimentation selon l'une des revendications précédentes.

11. Procédé d'alimentation en objets sensiblement cylindriques (4), pour lequel les objets sensiblement cylindriques (4) comprennent un axe longitudinal (75), pour lequel les objets sensiblement cylindriques (4) sont asymétriques suivant leur axe longitudinal (75), **caractérisé en ce que** le procédé comprend les étapes suivantes mises en oeuvre par un premier et un second appareils d'alimentation (2, 3) respectivement :
i) délivrer des objets (4) au moyen de moyens d'alimentation (6, 7) à une pluralité de premiers moyens
de convoyage sensiblement parallèles (8, 9) dans une orientation sensiblement verticale, pour lequel dans cette orientation verticale les axes longitudinaux (75) des objets sensiblement cylindriques (4) sont sensiblement perpendiculaires à la direction de transport des premiers moyens de convoyage (8, 9) ;
ii) convoyer les objets (4) sur la pluralité de premiers moyens de convoyage sensiblement parallèles (8, 9) ;
iii) entrainer en rotation les objets au moyen d'un ensemble rotatif (10, 11, 40) recevant les objets sensiblement cylindriques (4) provenant des premiers moyens de convoyage (8, 9) et pour lequel l'ensemble rotatif (10, 11, 40) change l'orientation de l'axe longitudinal (75) de chacun des objets sensiblement cylindriques (4) d'un même angle de rotation prédéterminé ;
iv) délivrer les objets sensiblement cylindriques (4) provenant de l'ensemble rotatif (10, 11, 40) à de seconds moyens de convoyage (19, 27), de sorte que les axes longitudinaux (75) respectivement d'un objet sensiblement cylindrique (4) provenant de chaque moyen de la pluralité de premiers moyens de convoyage sensiblement parallèles (8, 9) soient alignés les uns relativement aux autres en une ligne unique sur les seconds moyens de convoyage (19, 27) ; pour lequel les moyens d'alimentation (6) du premier appareil d'alimentation (2) disposent les objets sensiblement cylindriques (4) dans une première orientation et les moyens d'alimentation (7) du second appareil d'alimentation (3) disposent les objets sensiblement cylindriques (4) dans une seconde orientation, de sorte que les objets sensiblement cylindriques (4) dans la première orientation et la seconde orientation aient des axes longitudinaux (75) parallèles s'étendant dans des directions opposées ;
- pour lequel le procédé comprend, en outre, l'étape consistant à :
v) entrelacer successivement d'abord un objet sensiblement cylindrique (4) dans la première orientation, puis un objet sensiblement cylindrique (4) dans la seconde orientation sur de troisièmes moyens de convoyage (26) au moyen d'un appareil d'intercalage (5).

12. Procédé selon la revendication 11, pour lequel l'étape iii) consiste à :
- recevoir les objets sensiblement cylindriques (4) dans une orientation sensiblement verticale dans les emplacements (20) d'un jeu (14) d'emplacements (20) agencés à des positions radiales différentes et dans un alignement radial les uns relativement aux autres dans une roue (12, 13) ;
- entrainer en rotation les objets sensiblement cylindriques (4) de l'angle de rotation prédéterminé au moyen de la roue (12, 13) ; et
- recevoir les objets sensiblement cylindriques (4) au moyen des seconds moyens de convoyage (19, 27) après une rotation de la roue (12, 13) de l'angle de rotation prédéterminé.

13. Procédé selon la revendication 11, pour lequel l'étape iv) consiste à : recevoir respectivement un objet sensiblement cylindrique (4) provenant de chaque canal d'une pluralité de canaux verticaux parallèles dans une unique cannelure (62) d'un tambour cannelé (60) formant les seconds moyens de convoyage.
